# EUROPÄISCHE PATENTSCHRIFT

(11) **EP 0 419 702 B1**
(45) Veröffentlichungstag und Bekanntmachung des Hinweises auf die Patenterteilung: **11.01.1995**
(21) Anmeldenummer: 89117896.4
(22) Anmeldetag: 27.09.1989
(51) Int. Cl.: G05B 19/42

(54) **Verfahren zum Nachführen eines relativ zu einem Objekt mit spiegelnder Oberfläche bewegten Prüfkopfes**
Guidance method for a probe head moving relatively to an object with a reflecting surface
Procédé de guidage d'une tête de mesure en mouvement relatif par rapport à un objet ayant une surface réfléchissante

(43) Veröffentlichungstag der Anmeldung: 03.04.1991
(73) Patentinhaber: SIEMENS AKTIENGESELLSCHAFT, 80333 München (DE)
(72) Erfinder: Gerhard, Detlef, Dipl.-Ing., D-8000 München 40 (DE)

(56) Entgegenhaltungen:
- US-A- 4 675 502
- TECHNISCHE RUNDSCHAU. vol. 80, no. 16, 15 April 1988, BERN CH Seiten 36 - 43;BENNINGHOFF Hanns: "SENSOREN IN DER AUTOMATISIERTEN SCHWEISSTECHNIK "
- ROBOTICS. vol. 2, no. 1, März 1986, AMSTERDAM NL Seiten 31 - 43; DREWS P. et al.:"OPTICAL SENSOR SYSTEMS FOR AUTOMATED ARC WELDING"
- 1987 IEEE INTERNATIONAL CONFERENCE ON ROBOTICS AND AUTOMATION, MARCH 31 - APRIL 3, 1987, RALEIG H, NORTH CAROLINA, US vol. 2, 1987, NEW YORK, US Seiten 1019 -1024; NAYAK N. et al.: "CONCEPTUAL DEVELOPMENT OF AN ADAPTIVE REAL-TIME SEAMTRACKER FOR WELDING AUTOMATION"

## Beschreibung

Die Erfindung betrifft ein Verfahren zum Nachführen eines relativ zu einem Objekt mit spiegelnder Oberfläche annähernd parallel zu dieser Oberfläche bewegten Prüfkopfes in vorgegebenem Abstand und mit vorgegebener Ausrichtung zur Oberfläche. Dabei ist die Lage des Objektes zumindest ungefähr bekannt.

Für die Erkennung und die Einstellung bzw. Regelung eines gewünschten Abstandes zwischen zwei Gegenständen sind Sensoren erforderlich. Die Anforderung an einen Industrieroboter mit seinem Greifer oder eventuell einem an gleicher Stelle befestigten Prüfkopf der Kontur einer Autokarosserie zu folgen und dabei bestimmte Maximalwerte für die Abweichungen bezüglich des Abstandes und der Ausrichtung zwischen Karosserie und Prüfkopf nicht zu überschreiten, konnte mit bisher bekannten Sensoren und Verfahren nicht befriedigend erfüllt werden. Herkömmliche optische Sensorprinzipien versagen bei spiegelnden Flächen. Der Rückgriff auf nicht optische Verfahren ist mit dem Nachteil größerer Toleranzgrenzen verbunden. Mit der Zielsetzung der Minimierung von Fehlerquellen und Fehlergrößen werden jedoch Sensoren und Verfahren zum Vermessen gefordert, die beispielsweise eine genaue Bahnverfolgung eines Prüfkopfes entlang einer vorbestimmten Bahn bezüglich eines im groben bekannten Objektes mit einer maximalen Sollwertabweichung von wenigen Millimetern ermöglichen.

Aus der US-Patentschrift US-A-4,675,502 ist ein Lichtbogenschweißroboter oder ein ähnlicher Roboter zum Nachfahren einer Bahn bekannt, der mit einem Sensor am Roboterarm ausgestattet ist, um die gewünschte Position, bzw. den gewünschten Weg zu detektieren. Dabei wird eine dreidimensionale Nachführung des Roboterarmes auf eine vorgegebene oder gewünschte Bahn erzielt. Eine gleichzeitige Ausrichtung des Roboterarmes relativ zu der Oberfläche wird nicht erwähnt.

Der Erfindung liegt die Aufgabe zugrunde, ein Verfahren zur Nachführung eines Prüfkopfes auf eine ungefähr vorgegebene Bahn zu liefern, die annähernd parallel relativ zu der spiegelnden Oberfläche eines Objektes verläuft, bei vorgegebener Ausrichtung und entsprechender Nachführung des Prüfkopfes relativ zur Oberfläche.

Die Lösung dieser Aufgabe erfolgt dadurch, daß
- der Prüfkopf mindestens zwei jeweils aus einer Lichtquelle und einem zweidimensional auflösenden Empfänger bestehende optische Sensoren enthält,
- die anfängliche Ausrichtung des Prüfkopfes relativ zur spiegelnden Oberfläche derart geschieht, daß auf dem Empfänger ein von der Lichtquelle erzeugter, von der spiegelnden Oberfläche des Objektes reflektierter Lichtfleck abgebildet wird und
- beim Verfahren des Prüfkopfes annähernd parallel zur spiegelnden Oberfläche die Nachführung des Prüfkopfes entsprechend anfangs festgelegter Sollwerte in bezug auf den Abstand und die Ausrichtung des Prüfkopfes zur spiegelnden Oberfläche durch Nachregeln des Abstandes und der Ausrichtung des Prüfkopfes geschieht, wobei die Abbildung der Lichtflecken auf den Flächen der Empfänger auf eine durch die besagten Sollwerte anfänglich festgelegten Position auf den Empfängern geschieht.

Die zwischen 0 und 1 gemessene Reflexionsfähigkeit von Körpern bzw. deren Oberflächen liegt bei spiegelnden Oberflächen im oberen Bereich hinauf bis zum Wert 1. Durch das erfindungsgemäße Verfahren lassen sich Oberflächen vermessen, die einerseits noch mittels eines Triangulationsverfahrens vermeßbar sind, also bei niedrigeren Werten der Reflexionsfähigkeit liegen, oder maximale Reflexionsfähigkeit besitzen.

Der Erfindung liegt die Erkenntnis zugrunde, daß die Nachführung eines Prüfkopfes in bezug auf eine spiegelnde Oberfläche und bei einer vorgegebenen Bahn relativ zur Oberfläche durch zwei Sensoren geschehen kann, die jeweils aus einer Lichtquelle und einem zweidimensional auflösenden Empfänger bestehen, wobei die Lichtquelle einen Lichtpunkt auf der spiegelnden Oberfläche und damit eine Abbildung des Lichtpunktes auf der Fläche des Empfängers erzeugt. Diese anfänglich nach vorgegebenen Sollwerten eingestellte Konstellation wird beim Verfahren des Prüfkopfes relativ zur spiegelnden Oberfläche eines Objektes derart nachgeregelt, daß der Ort der Abbildung auf dem Empfänger konstant bleibt. Dies führt gleichzeitig dazu, daß der Abstand und die Ausrichtung des Prüfkopfes bezüglich der spiegelnden Oberfläche entsprechend der Sollwerte konstant bleibt. Der Sensor ist hierfür im Prüfkopf enthalten oder mit ihm fest verbunden.

Der Einsatz von zwei optischen Sensoren bietet eine hohe Genauigkeit des Verfahrens. Somit kann neben der Einstellung des Abstandes eine sichere Ausrichtung der Lage des Prüfkopfes bezüglich der spiegelnden Oberfläche entsprechend anfangs eingestellter Sollwerte durch Nachregelung beibehalten werden. Hierbei werden ebenfalls die Abbildungen der reflektierten Lichtpunkte auf den Empfängerflächen während des Verfahrens des Prüfkopfes relativ zur spiegelnden Oberfläche konstant gehalten.

Eine besondere Ausgestaltung sieht vor, daß eine Lichtquelle mit breiter Abstrahlcharakteristik verwendet wird. Somit kann für große Bereiche für Abstand und Ausrichtung zwischen Prüfkopf und spiegelnder Oberfläche bei der Einstellung der Sollwerte jeweils eine Abbildung auf der Empfängerfläche erzielt werden.

Für eine robuste Ausführung des Verfahrens werden Lichtquellen mit infrarotem Licht im Wellenlängenbereich von ca. 700 bis 1000 nm verwendet. Die hierfür erhältlichen Halbleiter sind unempfindlich, das Infrarotlicht in diesem Wellenlängenbereich wird gut gespiegelt und die Detektierbarkeit ist somit problemlos.

Im folgenden wird anhand der beiden Figuren ein Ausführungsbeispiel beschrieben.

Die Figur 1 zeigt ein Objekt 2 mit spiegelnder Oberfläche 6 und einen Prüfkopf 1.

Die Figur 2 zeigt eine orthogonale Anordnung von zwei Sensoren, die jeweils aus einer Lichtquelle 4 und einem Empfänger 5 bestehen.

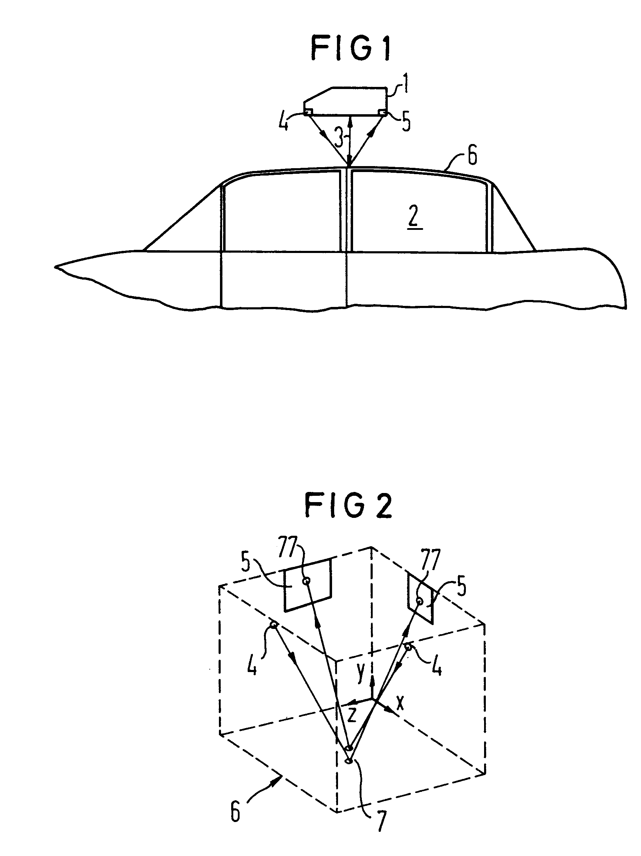

Die Figur 1 zeigt ein Objekt 2, beispielsweise eine Autokarosserie, und einen darüber befindlichen Prüfkopf 1. Der Prüfkopf 1 ist in der Regel an einem Roboterarm befestigt und mit diesem relativ zum Objekt 2 bewegbar. Der aus Lichtquelle 4 und und Empfänger 5 bestehende Sensor ist am Prüfkopf 1 befestigt bzw. enthalten. Die Oberfläche 6 spiegelt stark. Entsprechend vorgegebener Sollwerte wird der Abstand 3 und die Ausrichtung zwischen Prüfkopf 1 und Oberfläche 6 eingestellt und während des Verfahrens des Prüfkopfes 1 relativ zur Kontur der Oberfläche 6 durch Regelung beibehalten. Diese Nachregelung bezieht sich meist auf eine vorgegebene Bahn, auf der der Prüfkopf 1 relativ zum Objekt 2 bewegt wird. Durch die Bahn sind die Sollwerte bezüglich des Abstandes 3 festgelegt.

Die Figur 2 zeigt, wie eine sinnvolle gegenseitig orthogonale Ausrichtung zweier Sensoren zu verwirklichen ist. Die jeweils auf der Oberfläche 6 erzeugten Lichtpunkte 7 und die Abbildungen 77 auf den Flächen der Empfänger 5 sind durch die in der Zeichnung vorgeschlagene Anordnung gut erzielbar. Es ist leicht ersichtlich, daß eine Drehung des Prüfkopfes 1, der die aus Lichtquelle 4 und Empfänger 5 bestehenden Sensoren enthält, um die x-Achse eine Veränderung des Ortes der Abbildung 77 auf der rechten im Bild dargestellten Fläche des Empfängers 5 in der yz-Ebene bedeutet (x = constant). Eine Drehung um die z-Achse herum würde eine Veränderung der Abbildung 77 in der in der Figur links dargestellten Fläche des Empfängers 5 innerhalb der xy-Ebene bedeuten (z = constant). Durch entsprechende Nachregelung der Lage des Prüfkopfes kann die Position der Abbildungen 77 auf der Fläche der Empfänger 5 konstant gehalten werden, was gleichbedeutend ist mit der Konstanz der Lage und des Abstandes 3 des Prüfkopfes 1 bezüglich der Oberfläche 6. Hierbei ist jeweils ein aktuell vom Prüfkopf 1 vermessene Flächenausschnitt der Oberfläche 6 gemeint. Die in der Figur 2 nebeneinander dargestellten Lichtpunkte 7 auf der Oberfläche 6 werden zweckmäßigerweise am Anfang des Verfahrens bei der Einstellung des Prüfkopfes entsprechend vorgegebener Sollwerte durch Justierung der Sensoren zur Deckung gebracht.

Ein derartiges Verfahren kann speziell für die winkel- und abstandsgenaue Nachführung eines Prüfkopfes 1 bezüglich einer spiegelnden Oberfläche 6 einer Karosserie eines Autos eingesetzt werden. Die vorgegebene Bahn des Prüfkopfes 1 ist entsprechend einer vorhandenen "Einmeßkarosserie" im groben bekannt. In der Praxis zwangsläufig vorhandene Abweichungen zwischen idealem Modell und zu bearbeitendem Objekt 2 erfordern jedoch eine genaue Nachführung auf bestimmte Sollwerte während des Verfahrens des Prüfkopfes 1 bezüglich der Oberfläche 6. Beim speziellen Einsatz an einer Autokarosserie sind mittels des erfindungsgemäßen Verfahrens Krümmungsradien in der Oberfläche 6 ohne Fehler nachfahrbar, die bis hinab zu 300 mm reichen. Winkelgenauigkeiten von 0,1 Grad und Abstandstoleranzen von 1 mm können eingehalten werden. Der Abstand zwischen Sensor und Oberfläche 6 sollte dabei jedoch mindestens 100 mm betragen.

Die Autokarosserien besitzen in der Regel einen Glanzlack, der nur wenig diffus reflektiert. Das Spektrum der Farben variiert von weiß bis schwarz. Die Form der Oberfläche 6 ist uneinheitlich. Es ist zu beachten, daß das Material ferromagnetische Eigenschaften hat. Die durch derartig ausgebildete Objekte 2 vorgegebene Spiegelwirkung der Oberfläche 6 wird beim erfindungsgemäßen Verfahren ausgenutzt. Der Einsatz von infrarotem Licht ist vorteilhaft, weil hier ein schmalbandiges Lichtspektrum vorliegt und zudem der Spiegelungseffekt noch verstärkt wird. Störungen von Umgebungs- und Prüflicht können durch den Einsatz von Filtern in einfacher Weise vermieden werden. Als Empfänger 5 können zweidimensional auflösende Lateraldioden oder CCD-Bausteine verwendet werden. Als Sender werden im infraroten Bereich emittierende Dioden mit breiter Abstrahlcharakteristik verwendet.

Die Regelung der Abbildungen 77 zur Nachregelung von Abstand 3 und Ausrichtung des Prüfkopfes 1 geschieht in bekannter Weise durch eine Regelschleife. Am Anfang des Verfahrens werden im Stillstand Sollwerte für Abstand und Lage des Prüfkopfes 1 eingestellt und bei Vorhandensein von mehreren Sensoren die auf der Oberfläche 6 vorhandenen Lichtpunkte 7 zur Deckung gebracht. Dies geschieht durch entsprechende Justierung der Sensoren. Während des Verfahrens des Prüfkopfes 1 auf einer Bahn relativ zur Oberfläche 6 kann nun durch eine Regelschleife die Position der Abbildung 77 auf der Fläche der Empfänger 5, als vorgegebener Sollwert, konstant gehalten werden. Dies entspricht zugleich einem Konstanthalten des Abstandes 3 und der Ausrichtung des Prüfkopfes 1 bezüglich der Oberfläche 6, verbunden mit einer entsprechenden Nachführung des Prüfkopfes 1, um die beschriebenen Voraussetzungen zu erfüllen.

## Patentansprüche

1. Verfahren zum Nachführen eines relativ zu einem Objekt (2) mit spiegelnder Oberfläche (6) bewegten Prüfkopfes (1) in vorgegebenem Abstand (3) und mit vorgegebener Ausrichtung zur Oberfläche (6),
**dadurch gekennzeichnet**,
daß
- der Prüfkopf (1) mindestens zwei jeweils aus einer Lichtquelle (4) und einem zweidimensional auflösenden Empfänger (5) bestehende optische Sensoren enthält,
- die anfängliche Ausrichtung des Prüfkopfes (1) relativ zur spiegelnden Oberfläche derart geschieht, daß auf dem Empfänger (5) ein von der jeweiligen Lichtquelle (4) erzeugter, von der spiegelnden Oberfläche (6) des Objektes (2) reflektierter Lichtfleck (7) abgebildet wird und
- beim Verfahren des Prüfkopfes (1) annähernd parallel zur spiegelnden Oberfläche (6) die Nachführung des Prüfkopfes (1) entsprechend anfangs festgelegter Sollwerte in bezug auf den Abstand (3) und die Ausrichtung des Prüfkopfes (1) zur spiegelnden Oberfläche (6) durch Nachregeln des Abstandes und der Ausrichtung des Prüfkopfes (1) geschieht, wobei die Abbildung (77) der Lichtflecken (7) auf den Flächen der Empfänger (5) auf eine durch die besagten Sollwerte anfänglich festgelegte Position auf den Empfängern (5) geschieht.

2. Verfahren nach Anspruch 1,
**dadurch gekennzeichnet**,
daß eine Lichtquelle (4) mit breiter Abstrahlcharakteristik verwendet wird.

3. Verfahren nach Anspruch 1 oder 2,
**dadurch gekennzeichnet**,
daß eine Lichtquelle (4) mit infrarotem Licht im Wellenlängenbereich von ca. 700 bis 1000 nm verwendet wird.

4. Verfahren nach einem der vorhergehenden Ansprüche,
**dadurch gekennzeichnet**,
daß mehrere durch optische Sensoren auf der Oberfläche (6) des Objektes (2) erzeugte Lichtpunkte (7) am Anfang des Verfahrens durch eine Justierung zur Deckung gebracht werden.

## Claims

1. Method for guiding a probe head (1) which moves relative to an object (2) with a reflecting surface (6), at a predetermined spacing (3) from and with a predetermined orientation in relation to the surface (6), characterized in that
- the probe head (1) includes at least two optical sensors comprising in each instance a light source (4) and a two-dimensionally resolving receiver (5),
- the initial orientation of the probe head (1) relative to the reflecting surface takes place in such a manner that a light spot (7) which is generated by the respective light source (4) and which is reflected by the reflecting surface (6) of the object (2) is imaged on the respective receiver (5), and
- during the displacement of the probe head (1) approximately parallel to the reflecting surface (6), the guidance of the probe head (1) takes place in accordance with initially specified theoretical values in relation to the spacing (3) and the orientation of the probe head (1) in relation to the reflecting surface (6) by readjustment of the spacing and of the orientation of the probe head (1), the imaging (77) of the light spots (7) on the surfaces of the receivers (5) taking place onto a position on the receivers (5) which is initially specified by said theoretical values.

2. Method according to Claim 1, characterized in that a light source (4) with a broad emission characteristic is used.

3. Method according to Claim 1 or 2, characterized in that a light source (4) with infrared light within the wavelength range from approximately 700 to 1000 nm is used.

4. Method according to one of the preceding claims, characterized in that a plurality of light points (7) generated by optical sensors on the surface (6) of the object (2) are brought into coincidence by an adjustment at the start of the displacement.

## Revendications

1. Procédé de guidage d'une tête de mesure (1) en mouvement relatif par rapport à un objet (2) ayant une surface réfléchissante (6) à une distance donnée (3) et avec une orientation donnée par rapport à la surface (6),
caractérisé en ce que,
- la tête de mesure (1) comporte au moins deux capteurs optiques consistant à chaque fois en une source lumineuse (4) et un récepteur séparateur bidimensionnel (5),
- l'orientation initiale de la tête de mesure (1) par rapport à la surface réfléchissante est telle qu'une tache de lumière (7) produite par la source lumineuse (4) respective et réfléchie par la surface réfléchissante (6) de l'objet (2) se reproduit sur le récepteur (5) respectif, et
- lors du déplacement de la tête de mesure (1) approximativement parallèlement à la surface réfléchissante (6), le guidage de la tête de mesure (1), correspondant à des valeurs de consigne déterminées initialement, en fonction de la distance (3) et de l'orientation de la tête de mesure (1) par rapport à la surface réfléchissante (6), s'effectue par ajustage de la distance et de l'orientation de la tête de mesure (1), la reproduction (77) des taches de lumière (7) sur les surfaces du récepteur (5) s'effectuant en une position, sur le récepteur (5), déterminée initialement par lesdites valeurs de consigne.

2. Procédé selon la revendication 1,
caractérisé en ce que, une source lumineuse (4) ayant une large caractéristique d'émission est utilisée.

3. Procédé selon la revendication 1 ou 2,
caractérisé en ce qu'une source lumineuse (4) avec lumière infrarouge de longueur d'onde comprise environ entre 700 et 1.000 nm est utilisée.

4. Procédé selon l'une des revendications précédentes,
caractérisé en ce que plusieurs points lumineux (7) produits par des capteurs optiques sur la surface (6) de l'objet (2) sont amenés à coïncider par un ajustage au début du procédé.
